(19) Europäisches Patentamt

European Patent Office

Office européen des brevets

(11) **EP 0 896 796 A2**

## (12) EUROPEAN PATENT APPLICATION

(43) Date of publication:
**17.02.1999 Bulletin 1999/07**

(51) Int Cl.⁶: **A23L 1/216**

(21) Application number: **98650048.6**

(22) Date of filing: **31.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.08.1997 IE 970578**

(71) Applicants:
- **Ahern, Rita**
  **Kanturk, County Cork (IE)**
- **Dennigan, Joseph**
  **Old Town, County Dublin (IE)**
- **Dennigan, Samuel**
  **Ballybougal, County Dublin (IE)**

(72) Inventors:
- **Ahern, Rita**
  **Kanturk, County Cork (IE)**
- **Dennigan, Joseph**
  **Old Town, County Dublin (IE)**
- **Dennigan, Samuel**
  **Ballybougal, County Dublin (IE)**

(74) Representative: **McKeown, Yvonne Mary et al**
**c/o MacLachlan & Donaldson,**
**47 Merrion Square**
**Dublin 2 (IE)**

### (54) Process for making potato skin shells

(57) A simulated baked potato skin product is formed by comminuting potato skins with suitable ingredients to form a pourable batter. The batter is poured between female and male mould portions which mould the batter into a shell shaped like the skin of a scooped-out half of a baked potato. The batter is then cooked and set into the moulded shape. A number of moulded shells can be formed at the same time by providing male and female trays, each carrying a plurality of mould portions. The female portion is shaped to impart to the outer surface of the product an appearance and texture which resembles that of a natural baked potato skin. It has a flattened base so that the base of the potato skin shell is flat to prevent it rolling on a serving dish.

FIG.1

EP 0 896 796 A2

## Description

The present invention relates to a process for preparing an edible product, in particular a reconstituted potato skin product suitable for use as a shell or receptacle for receiving a stuffing.

Potatoes baked in their skins or jackets are widely popular as a snack food or as a sustaining meal. Commonly, they are prepared by baking a whole potato, cutting it in half, scooping the cooked flesh out of the skin shells, mashing the flesh and optionally mixing it with other ingredients and returning the mash into the shells, optionally with a topping. Usually, the prepared baked potato will be reheated before serving. Typically, the product is prepared in advance and reheated from cold for serving. The product may be stored frozen until required.

United Kingdom Patent No. 1 509 721 describes a process for preparing a fabricated baked potato product in which pre-baked potatoes are processed into two fractions. The first consists of the potato skin and a portion of the flesh and this is processed into a cohesive mixture. The second fraction comprises a potato mash portion. An outer layer of the skin mixture is formed around a core of the mash manually or by extrusion, to provide a simulated baked potato-like product.

In United States Patent No. 4 735 818, there is disclosed a potato skin product produced by comminuting raw potato skin to form a thick, runny soup, adding a binder to the soup and cooking the soup to form a thin, flexible potato skin product. The soup is sprayed onto a shaped mould so as to coat the mould. Excess soup is poured out of the mould prior to heating the mould to set the soup in the moulded shape. However, this method of producing baked potato shells is inexact, produces shells of varying thicknesses and does not lend itself to automated production of large numbers of shells.

The present invention seeks to provide a process for preparing a baked potato skin shell product by an automated process in which large numbers of the shells can be turned out in a relatively short time.

Accordingly, the present invention provides a process for preparing an edible product comprising the steps of:-

(a) preparing a pourable batter from raw and/or cooked comminuted potato skin, an aqueous diluent and a binder;
(b) pouring the batter into a female mould portion shaped as a scooped-out, half potato skin;
(c) lowering a male mould portion shaped to correspond to the female mould portion into the female mould portion to displace the excess batter about the female mould portion and to form between the portions a shell of batter with a shape resembling that of a scooped-out half potato skin;
(d) heating at least one of the mould portions to cook the batter shell and to set it into the moulded shape; and
(e) releasing the cooked shell from the mould portions.

Preferably, the potato should have a dry matter content of at least 22% and the skin of the potato should be smooth, of uniform colour and disease or blemish free. The comminuted potato skin comprises raw or cooked skin or a mixture thereof.

A plurality of edible products are conveniently prepared simultaneously by providing a plurality of female mould portions disposed on a female mould tray and a corresponding number of male mould portions disposed on a male mould tray. A fixed volume of batter may be dosed automatically into the female mould portion before or after the male mould portion is introduced into juxtaposition with its female counterpart.

The present invention also provides an edible potato jacket product comprising a cooked and set batter prepared from comminuted potato skin, an aqueous diluent and a binder, the product having the appearance of the jacket of a baked potato and being formed by pouring batter between female and male mould portions sized and shaped to impart to the batter the size and form of a scooped-out potato skin half and heating to set the batter into the moulded shape.

Preferably, the base of the female mould portion is flattened so that the product has a flattened base. The female mould portion may be textured so as to impart to the outer surface of the product an appearance and texture resembling that of the skin of a baked potato.

The process involves preparing a potato skin batter, dosing a fixed volume of batter into a female mould portion, inserting a male mould portion into the female portion to form a thin layer of batter of predetermined thickness between the moulds and to displace excess batter from the mould, and heating at least one of the mould portions to set the batter into a shell shape. Thereafter, the shell is released from the moulds to provide a flexible potato skin shell product suitable for immediate use or for storage, following a chilling or freezing cycle. The batter receiving surface of the female portion of the mould may be formed with irregularities which mimic the appearance and texture of the outer skin of a potato, to give the product the appearance of natural potato skin. The female mould may further bear an impression capable of imparting product information or proprietary information (such as a trade mark or logo) to the outer surface of the skin.

Once formed and released from between the two mould portions, the potato skin shells may be filled with potato filling and chilled or frozen. Alternatively, the shells may be frozen unfilled, and stored until required.

The male and female mould portions will normally be formed separately. They may, however, be connected by means such as a hinge. In a preferred arrangement, the female mould portion is formed as part of a female tray which houses a number of such female portions. Likewise, the male mould portion is formed as part of a male tray comprising a number of male mould portions and the male mould portions are spaced apart to match the spacings of the female mould portions on the female tray so that a plurality of shells may be formed simultaneously when the female and male trays are superimposed.

Preferably, the moulds or trays are made of a suitable heat conducting metal and are coated with Teflon (trade mark) or some other agent which assists in the release of the cooked shells from the moulds. Most conveniently, both mould parts are heated to cook and set the shell into the moulded shape. In a preferred process, the two mould parts are preheated prior to introduction of the potato batter so that the residence time of the batter in the moulds will be relatively short, so that the shells will be cooked evenly and so that the rate of turnout of the cooked shells is increased.

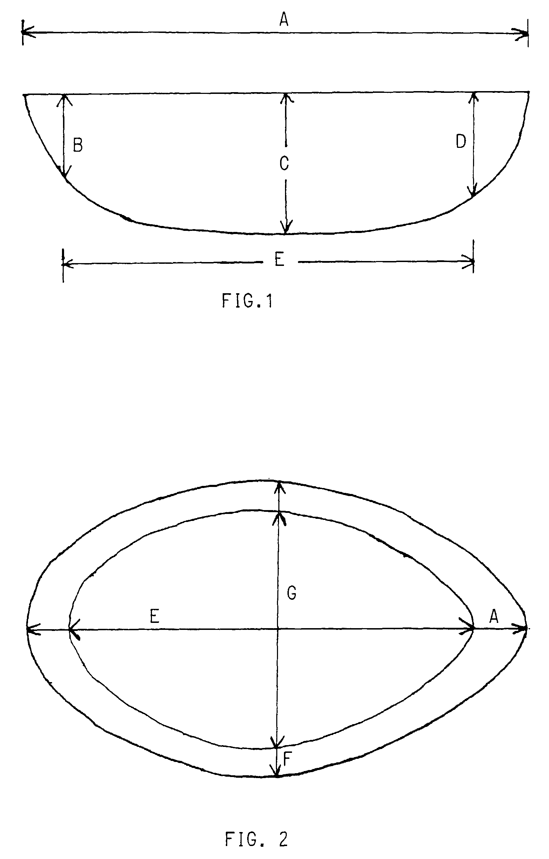

The female and male moulds preferably have a flattened base, so that the potato shell produced from them has a flattened base which enables it to rest on a serving surface without rolling to either side. A typical shape for the mould is shown, in side elevation in Figure 1 and in plan view in Figure 2. As may be seen, the mould is shaped to resemble the typical shape of a half of an elongate potato, cut along the long axis of the potato. Typical dimensions for the mould shown in Figures 1 and 2 are:-

A = 96 mm, B = 30 mm, C = 35 mm, D = 30 mm, E = 60 mm.

The width F at the upper side of the mould is typically 75 mm. The dimension E represents the length dimension of the flattened area of the base of the mould. The width G of this area is typically 47 mm, and the male mould portion has dimensions which correspond to those of the female mould portion but which are smaller by about 2 mm, so as to allow a potato skin shell of a thickness of a range between about 2 mm to about 5 mm to be formed between the mould portions. This is so, because if logos and trademarks are being used, thicknesses required will vary.

Certain varieties of Irish grown potatoes are more suitable than others for incorporation into the potato batter used in the invention.

The ideal potato raw materials for use in the invention satisfy three criteria, namely:

1) have a high dry matter content, preferably not less than 22% dry matter;
2) has a skin which is smooth and clear from disease and scale; and
3) the potato skin must have a uniform colour.

In order to satisfy these criteria under Irish conditions throughout the year it has been found that two varieties yield the best results, i.e. Rooster and Kerrs Pink varieties.

While generally these varieties are high in dry matter, specific cooking cycles are used in the cooking of each batch to take into account the particular dry matter content of the batch being used. This ensures that a consistent product can be achieved. Depending on the growing conditions (soil quality and weather), each sample will have its own specific starch composition to yield a floury or a waxy potato flesh.

Each batch is tested before cooking and a suitable time/temperature combination decided.

The carefully selected raw material will yield both a suitable skin finish in the reconstituted skin and maximum functionality in terms of binding the reconstituted skin.

Whether raw potato skin or cooked potato skin is used in the batter formulation, the higher dry matter potato skins create better binding of the reconstituted skin.

Due to the fact that the starch in potatoes changes in character over the potato storage season, it is critical to store the selected raw material in controlled conditions over the latter part of the season i.e. February - August in Ireland. This preserves the starch in its ideal state for processing into potato skin. The storage conditions involve temperature control at 4-5 degrees centigrade and the avoidance of sprout suppressants.

Due to the fact that high dry matter content potatoes are more prone to bruising, it is crucial to minimise handling damage throughout harvesting and storage. This will at least minimise the black spots inside the skin. Thus, trained farmers are used to supply the raw material to the potato graders/storers.

The preferred potato varieties may be used alone or in any combination to achieve the desired skin finish.

The invention will now be described in more detail with reference to the following non-limiting Examples, which are given to illustrate the invention.

**Example 1:**

**Batter Production**

*Recipe - Weight %*

19% Potato Skins from Rooster (raw or baked, or in combination, to a maximum of 19%) of 22% dry matter content.
5.8% Milk + 60% Water blend - heated to 65°C.
6.9% Potato Flake
6.9% Potato Starch
1.4% Whey Protein Concentrate (Alacen 132-New Zealand Milk Product 83% Protein - Dry Basis and 79.5% as is)

The potato skins are dry chopped to 1 mm pieces in an industrial blender. The heated water/milk blend is then added to the potato skins and blended in the industrial blender. The potato flake and potato starch are dry blended together before addition to the water/milk/skins solution. Finally, the whey protein concentrate is added to the mix and thoroughly blended in the blender. Optional dry seasonings can be added at the final stage to produce flavoured potato skins such as southern fried flavour, Cajun flavour, roast potato flavour etc. Similarly, various colours can be added at the final stage to impart different food colours, e.g. brown fried colour.

Potato Mould Production

The potato skin batter is then transferred to a specially built machine adapted from an ice-cream cone type baking machine. The potato jacket machine allows semiautomatic production of potato skins from moulds at the rate of approximately 600 per hour. This machine can be gas or electrically heated. Separate temperature adjustment may be made for the female and the male mould portions. A batter container, a dosing pump and a scraping knife are also provided. The upper section of the mould (the male tray half), which holds the potato mould male portions, is mounted on two steel pillars. These two pillars are also used as guides for vertically opening and closing of the male and female mould trays, by way of a hand lever. Counterweights are fitted to make this easier. After the upper section of the mould has been separated vertically, the individual female portions of the lower female mould tray section are separated horizontally using a hand lever. 30 ml. of potato skin batter are dosed into each female mould portion. Next, the male tray is lowered toward the female tray until it comes into contact with the batter and displaces it so as to coat the whole of the female portion. Excess batter, if any, flows out of the female mould portion and may be discarded or saved for re-use. The female mould portion is heated to 280°C and the male mould portion is heated to 280°C. Cooking is allowed to continue for 1 minute, then the mould trays are separated. By special "ejector" grooves the shells detach themselves automatically and fall into a collecting container below the baking mould. The guides for the lower section of the mould are attached to the steel body of the machine.

When the lower mould section has been closed, the batter for a new batch is poured simultaneously, using the dosing pump, which permits precise quantity control. This baking machine can be operated by an unskilled worker performing just a few simple actions.

The potato skin shells formed as described above will normally have a thickness in the range of 2 to 5 mm. The cooked shells may be chilled or frozen directly after manufacture. Alternatively, they may be transferred to a filling station and filled with potato mash.

The filled shells may then be topped with cheese or other topping and thereafter chilled or frozen. If the product is to be frozen, the freezing is preferably conducted by rapid-freezing to a core temperature of -23°C. The product so obtained is freeze-thaw stable and may be reheated prior to consumption.

Example 2:

Batter Production

*Recipe - Weight %*

50% Water
30% Potato Skins from Rooster Potatoes of 22% dry matter content (raw or baked or in combination to a maximum of 30%).
10% Potato Starch
5% Potato Flour
2% Maltodextrin
1.5% Carrageenan
1% Butter
0.5% Caramel colour

The potato skins are dry chopped to 1 mm pieces in an industrial blender. The water is then added to the potato skins and blended in the industrial blender. The potato starch and potato flour are dry blended together before addition to the water/skins solution. The melted butter, maltodextrin and colouring are added and blended. Finally, the carrageenan is added to the mix and is fully blended. Optional dry seasonings may be added at this final stage to produce flavoured potato skins such as southern fried flavour, Cajun flavour etc. Similarly, various colours can be added at the final stage to impart different food colours, e.g. brown fried colour.

The prepared batter is then further processed as described above in relation to Example 1.

It will of course be understood that the invention is not limited to the specific details described herein, which are given by way of example only, and that various modifications and alterations are possible within the scope of the invention as defined in the amended claims.

Claims

1. A process for preparing an edible product comprising the steps of:-

(a) preparing a pourable batter from comminuted potato skin, an aqueous diluent and a binder;

(b) pouring the batter into a female mould portion shaped as a scooped-out, half potato skin;

(c) lowering a male mould portion shaped to correspond to the female mould portion into the female mould portion to displace the batter about the female mould portion and to form between the portions a shell of batter with a shape resembling that of a scooped out half potato skin;

(d) heating at least one of the mould portions to cook the batter shell and to set it into the moulded shape; and

(e) releasing the cooked shell from the mould portions.

2. A process according to Claim 1 in which a plurality of edible products are prepared simultaneously by providing a plurality of female mould portions disposed on a female mould tray and a corresponding number of male mould portions disposed on a male mould tray.

3. A process according to Claim 1 or Claim 2, in which the base of the female mould portion is flattened so that the product has a flattened base.

4. A process according to any preceding claim, in which the female mould portion is textured so as to impart to the outer surface of the product an appearance and texture resembling that of the skin of a baked potato.

5. A process according to any preceding claim, in which the comminuted potato skin is derived from a potato variety or mixture of varieties having at least 22% dry matter content.

6. A process according to any preceding claim, in which the comminuted potato skin is derived from potatoes having a smooth, blemish or disease-free skin of substantially uniform colour;
    and optionally in which the comminuted potato skin comprises raw or cooked skin or a mixture thereof.

7. An edible potato jacket product comprising a cooked and set batter prepared from comminuted potato skin, an aqueous diluent and a binder, the product having the appearance of the jacket of a baked potato and being formed by pouring batter between female and male mould portions sized and shaped to impart to the batter the size and form of a scooped-out potato skin half and heating to set the batter into the moulded shape.

8. A product according to Claim 7, which is formed with a flattened base;
    and optionally in which the outer surface of the product has an appearance and texture resembling that of the skin of a baked potato.

9. A product according to Claim 7 or Claim 8, in which the comminuted potato skin is derived from a potato variety or mixture of varieties having at least 22% dry matter content.

10. A product according to any of Claim 7 to 9, in which the comminuted potato skin is derived from potatoes having a smooth, blemish-free skin of substantially uniform colour;
    and optionally in which the comminuted potato skin comprises raw or cooked skin or a mixture thereof.

FIG.1

FIG. 2